# EUROPEAN PATENT APPLICATION

(11) **EP 4 318 374 A1**
(43) Date of publication of application: **07.02.2024**
(21) Application number: 23187465.2
(22) Date of filing: 25.07.2023
(51) Int. Cl.: G06T 1/00, G06T 7/00

(54) **IMAGE PROCESSING METHOD, VISION SYSTEM, FAULT LOCATING METHOD AND MOTOR VEHICLE**

(30) Priority: 26.07.2022 CN 202210895714
(71) Applicant: Valeo Interior Controls (Shenzhen) Co., Ltd., Shenzhen, Guangdong 518103 (CN)
(72) Inventor: Zhao, Guangyue, Shenzhen, 518128 (CN)
(74) Representative: Jauregui Urbahn, Kristian

(57) **Abstract**

The present disclosure proposes an image processing method, a vision system, a fault locating method and a motor vehicle. Through the addition of markers when each processing unit is subjecting an image signal to processing, the markers corresponding thereto and being distinguishable from one another on an image frame of a final image signal, there are advantages of simple, convenient and quick fault locating, and low development, maintenance and debugging costs. Furthermore, because the markers are added to the image frame of the final image signal at a suitable frame rate and in a suitable form, there are further advantages of not affecting the original functions of the vision system and not disturbing the motor vehicle driver. Moreover, because the markers are widely distributed on the image frame of the final image signal to comprehensively reflect faults in the image frame of the final image signal without omission, there is the further advantage of high sensitivity in fault detection.

## Description

### Technical Field

The present disclosure relates to the field of motor vehicle vision systems, in particular to an image processing method, a vision system, a fault locating method and a motor vehicle.

### Background Art

As demand for motor vehicle advanced driver assistance (ADAS) rises significantly and the associated technology is widely applied, an ever growing number of motor vehicle vision systems are being widely used in motor vehicles, to perform functions such as pedestrian identification, lane detection, traffic sign recognition, imaging for reversing, and 360-degree panoramic imaging.

In motor vehicle vision systems currently in use, it is generally necessary to subject original images collected by a camera for example to corresponding processing (e.g. image noise reduction, rendering, fusion, etc.) in multiple processing steps, and finally output the processed final output image via an image output device such as a display. Thus, motor vehicle vision systems usually correspondingly include multiple processors to perform corresponding processing steps. However, since the user or developer is usually only able to observe the abovementioned processed final output images via the abovementioned image output device, it is difficult for him to be aware of the specific processing performed on the images in the multiple processing steps. In other words, if a fault occurs in a particular processing step or a particular processor in the motor vehicle vision system, then by solely relying on direct observation of the final output image outputted on the image output device, the user or developer will generally find it difficult to judge in which processing step or processor the fault has occurred so as to troubleshoot and locate the fault. For this reason, if a fault is found in a motor vehicle vision system in the process of using or developing the motor vehicle vision system, then in order to troubleshoot and locate the fault in the motor vehicle vision system, a specialist is usually required to troubleshoot and analyse the fault with the aid of a corresponding additional debugger in a complex operation.

Thus, there is a need for an image processing method, a vision system, a fault locating method and a motor vehicle. These can locate faults in the vision system conveniently, quickly and accurately through observation of final output images of an image output device, without the aid of an additional debugger used by a specialist, so as to meet the demand for reduction of the development/debugging and maintenance costs of vision systems.

### Summary of the Invention

In response to the above problem, the present disclosure proposes an image processing method, a vision system, a fault locating method and a motor vehicle. The image processing method, vision system, fault locating method and motor vehicle according to the present disclosure can troubleshoot and locate faults in the vision system quickly, and are especially suitable for use in the field of motor vehicles.

In the sense of the present disclosure, the motor vehicle may be any vehicle. A preferred motor vehicle is, for example, a road vehicle or a track vehicle. Particularly preferably, the motor vehicle is a road vehicle, such as a passenger vehicle or a truck.

According to one aspect of the present disclosure, an image processing method for a vision system is proposed, wherein the vision system comprises an image output unit and multiple processing units, the image processing method comprising: receiving an original image signal; successively processing the original image signal by means of the multiple processing units; and outputting a processed final image signal by means of the image output unit, wherein the multiple processing units comprise a first processing unit and a second processing unit, and the step of successively processing the original image signal by means of the multiple processing units comprises: subjecting the original image signal to first processing by means of the first processing unit to output a first image signal; subjecting the first image signal to second processing by means of the second processing unit to output a second image signal, wherein the first processing comprises adding a first marker corresponding to the first processing unit, the second processing comprises adding a second marker corresponding to the second processing unit, the final image signal comprises the first marker and the second marker, and the first marker is configured to be distinguishable from the second marker through acquisition of the final image signal outputted by the image output unit.

According to a more detailed implementation of the image processing method of the present disclosure, in the first processing, the first marker is added at a first frame rate lower than an output frame rate of the final image signal, and in the second processing, the second marker is added at a second frame rate lower than the output frame rate of the final image signal.

According to a more detailed implementation of the image processing method of the present disclosure, the first frame rate and the second frame rate are not greater than 3 fps.

According to a more detailed implementation of the image processing method of the present disclosure, the first marker is constructed as a first watermark, and the second marker is constructed as a second watermark which is distinguishable from the first watermark through acquisition of the final image signal outputted by the image output unit.

According to a more detailed implementation of the image processing method of the present disclosure, the first marker has a colour and/or shape and/or position in an image frame of the final image signal which is distinguishable from the second marker through acquisition of the final image signal outputted by the image output unit.

According to a more detailed implementation of the image processing method of the present disclosure, the first marker and/or the second marker is constructed as multiple pixel points widely distributed in an image frame of the final image signal.

Here, in the image processing method according to the present disclosure, when each processing unit is subjecting the image signal to processing, a marker is added which corresponds to this processing, the markers being distinguishable from one another on the image frame of the final image signal outputted by the image output unit. Thus, if a fault occurs in one of the processing units in the vision system, the fault position can be determined by acquiring the final image signal and analysing the distorted marker on the image frame thereof, because the markers can be distinguished from one another. Therefore, the image processing method according to the present disclosure has the advantage of simple, convenient and quick downstream fault locating and troubleshooting, reducing the development/debugging costs of the vision system as well as the maintenance costs in the event of a fault.

A second aspect of the present disclosure relates to a vision system, comprising an image output unit and multiple processing units, the multiple processing units comprising a first processing unit and a second processing unit, the first processing unit being configured to subject an original image signal to first processing to output a first image signal; the second processing unit being configured to subject the first image signal to second processing to output a second image signal; and the image output unit being configured to output a final image signal, wherein the first processing comprises adding a first marker corresponding to the first processing unit, the second processing comprises adding a second marker corresponding to the second processing unit, the final image signal comprises the first marker and the second marker, and the first marker is configured to be distinguishable from the second marker through acquisition of the final image signal outputted by the image output unit.

According to a more detailed implementation of the vision system of the present disclosure, the first processing unit is further configured to add the first marker in the first processing at a first frame rate lower than an output frame rate of the final image signal, and the second processing unit is further configured to add the second marker in the second processing at a second frame rate lower than the output frame rate of the final image signal.

According to a more detailed implementation of the vision system of the present disclosure, the first frame rate and the second frame rate are not greater than 3 fps.

According to a more detailed implementation of the vision system of the present disclosure, the vision system is configured to construct the first marker as a first watermark, and construct the second marker as a second watermark which is distinguishable from the first watermark through acquisition of the final image signal outputted by the image output unit.

According to a more detailed implementation of the vision system of the present disclosure, the first marker has a colour and/or shape and/or position in an image frame of the final image signal which is distinguishable from the second marker through acquisition of the final image signal outputted by the image output unit.

According to a more detailed implementation of the vision system of the present disclosure, the first marker and/or the second marker is constructed as multiple pixel points widely distributed in an image frame of the final image signal.

According to a more detailed implementation of the vision system of the present disclosure, the vision system comprises a panoramic imaging system, a reversing camera system, an electronic rear view mirror system, an intelligent front camera system, a blind spot monitoring system, a driving recorder system and an autonomous driving system based on a vision system.

Here, the vision system according to the present disclosure has advantages corresponding to those of the image processing method according to the present disclosure; for conciseness, details are not repeated here.

A third aspect of the present disclosure relates to a fault locating method for a vision system, wherein the vision system comprises an image output unit and multiple processing units, the multiple processing units being configured to successively subject an original image signal to processing, the processing comprising adding a marker corresponding to the respective processing unit, wherein multiple markers corresponding to each of the multiple processing units are configured to be distinguishable from one another through acquisition of a final image signal outputted by the image output unit, and the image output unit is configured to output the final image signal, the fault locating method comprising: acquiring the final image signal outputted by the image output unit, the final image signal comprising multiple markers corresponding to each of the multiple processing units; determining a marker that is distorted last among the multiple markers; locating a fault as being at the processing unit corresponding to the marker that is distorted last.

According to a more detailed implementation of the fault locating method of the present disclosure, the markers corresponding to each of the multiple processing units are added at a frame rate lower than an output frame rate of the final image signal.

According to a more detailed implementation of the fault locating method of the present disclosure, the frame rate is not greater than 3 fps.

According to a more detailed implementation of the fault locating method of the present disclosure, the markers corresponding to each of the multiple processing units are constructed as watermarks which are distinguishable from one another through acquisition of the final image signal outputted by the image output unit.

According to a more detailed implementation of the fault locating method of the present disclosure, the final image signal outputted by the image output unit is acquired by means of an image acquisition device, wherein an acquisition frame rate of the image acquisition device is higher than an image output frame rate of the image output unit.

According to a more detailed implementation of the fault locating method of the present disclosure, the markers corresponding to each of the multiple processing units have respective colours and/or shapes and/or positions in an image frame of the final image signal which are distinguishable from one another through acquisition of the final image signal outputted by the image output unit.

According to a more detailed implementation of the fault locating method of the present disclosure, the markers corresponding to each of the multiple processing units are respectively constructed as multiple pixel points widely distributed in an image frame of the final image signal.

Here, in the fault locating method according to the present disclosure, the final image signal outputted by the image output unit is captured by means of the image acquisition device and the distorted marker on the image frame thereof is analysed, and the position of a fault can then be determined because the markers can be distinguished from one another. Thus, the fault locating method according to the present disclosure has the advantage of simple, convenient and quick fault locating and troubleshooting, reducing the development/debugging costs of the vision system as well as the maintenance costs in the event of a fault.

A fourth aspect of the present disclosure relates to a motor vehicle comprising the vision system described above.

Here, the motor vehicle according to the present disclosure has advantages corresponding to those of the image processing method according to the present disclosure; for conciseness, details are not repeated here.

In summary, the present disclosure proposes an image processing method, a vision system, a fault locating method and a motor vehicle. In summary, through the addition of markers when each processing unit is subjecting the image signal to processing, the markers corresponding thereto and being distinguishable from one another on the image frame of the final image signal, the image processing method, vision system, fault locating method and motor vehicle according to the present disclosure have the advantages of simple, convenient and quick fault locating, and low development, maintenance and debugging costs. Furthermore, because the markers are added to the image frame of the final image signal at a suitable frame rate and in a suitable form, the image processing method, vision system, fault locating method and motor vehicle according to the present disclosure have the further advantages of not affecting the original functions of the vision system and not disturbing the motor vehicle driver. Moreover, because the markers are widely distributed on the image frame of the final image signal to comprehensively reflect faults in the image frame of the final image signal without omission, the image processing method, vision system, fault locating method and motor vehicle according to the present disclosure have the further advantage of high sensitivity in fault detection.

### Brief Description of the Drawings

To explain the technical solution of embodiments of the present disclosure more clearly, the drawings which need to be used in describing the embodiments are described in simple terms below. Obviously, the drawings in the description below are merely some embodiments of the present disclosure, and those skilled in the art could obtain other drawings based on these drawings without expending inventive effort. The drawings below have not been drawn by meticulously reducing or enlarging actual dimensions in equal proportion, but focus on showing the substance of the present disclosure.
Fig. 1 shows a schematic block diagram of a vision system 100 according to embodiments of the present disclosure.
Fig. 2A shows a flow chart of an image processing method 200 for a vision system according to embodiments of the present disclosure.
Fig. 2B shows a flow chart of sub-steps of the image processing method 200 for a vision system according to embodiments of the present disclosure.
Fig. 3 shows a flow chart of the fault locating method 300 for the vision system 100 according to embodiments of the present disclosure.
Fig. 4 shows a schematic block diagram of the vision system 100 according to embodiments of the present disclosure when the first processing unit 121 has a fault.
Fig. 5 shows a schematic block diagram of the vision system 100 according to embodiments of the present disclosure when the second processing unit 122 has a fault.
Fig. 6 shows a schematic embodiment of the motor vehicle 600 according to the present disclosure.

### Detailed Description of the Invention

The technical solution in embodiments of the present disclosure will be described clearly and completely below with reference to the drawings. Obviously, the embodiments described are merely some, not all, of the embodiments of the present disclosure. All other embodiments obtained by those skilled in the art based on embodiments of the present disclosure without inventive effort shall also fall within the scope of protection of the present disclosure.

As indicated in the present disclosure and claims, unless expressly specified otherwise in the context, words such as "a", "one", "one type", and/or "said" do not specifically mean the singular, but may also include the plural. Generally, the terms "comprise" and "include" only indicate the inclusion of expressly identified steps and elements, but these steps and elements do not constitute an exclusive list, and a method or device may also include other steps or elements.

In addition, in this Description and the drawings, the terms "first/second" are merely used to distinguish between similar objects and do not represent a specific sorting of the objects. It will be understood that if permitted, "first/second" may be exchanged for a specific order or sequence, to enable embodiments of the present disclosure described herein to be implemented in a different order from that illustrated or described herein.

In addition, in this Description and the drawings, if a flowchart is used to describe steps of the method according to embodiments of the present disclosure, it should be understood that a previous or following step is not necessarily performed precisely in order. Conversely, various steps may be processed in reverse order or at the same time, unless explicitly defined in embodiments of the present disclosure. Moreover, other operations may be added to these processes, or one or more steps may be removed from these processes.

Motor vehicle vision systems currently in use generally comprise multiple processors/processing units, to subject original images to corresponding processing. Taking a panoramic imaging system as an example, this first of all usually needs to collect video images of the motor vehicle's surroundings by means of wide-angle cameras mounted at four compass points of the vehicle (front, rear, left, right). Subsequently, it is further necessary to subject the video images collected by the four wide-angle cameras to multiple processing steps such as image distortion correction, projective transformation, image registration and image fusion/stitching with the aid of multiple processing units, in order to obtain a panoramic image of the vehicle body's surroundings, and finally display this for example on a screen on a console in the motor vehicle, so as to expand the field of view of the driver of the motor vehicle, and effectively prevent the motor vehicle from suffering accidents such as scrapes or collisions when passing over complex road surfaces.

As can be seen, motor vehicle vision systems currently in use generally need to include multiple processing units to perform corresponding processing steps. Motor vehicle vision systems generally need to subject original images to corresponding processing in multiple processing steps, in order to perform the required functions of the motor vehicle vision system and finally output the processed final output image via an image output device such as a display. Thus, taking into account the situation regarding the multiple processing units/processing steps mentioned above, if a fault occurs in one or more processing units or processing steps in the vision system, then by solely relying on direct observation of the final output image outputted on the image output device, the user or developer will generally find it difficult to judge in which processing step or processing unit the fault has occurred so as to troubleshoot and locate the fault. However, troubleshooting and analysis of faults with the aid of a corresponding additional debugger requires the operator to have a high level of professional skill, and fault troubleshooting and locating operations are quite complex.

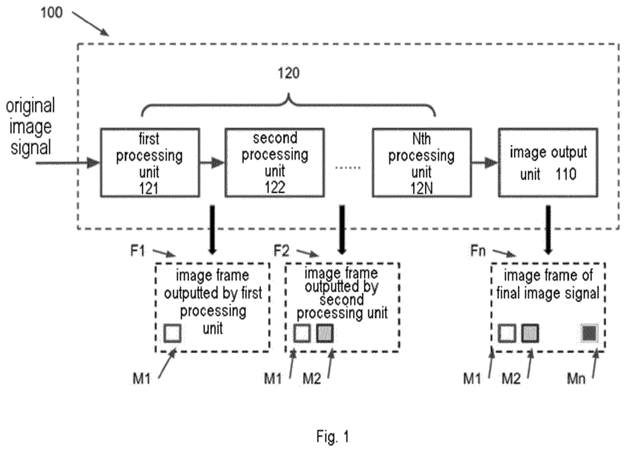

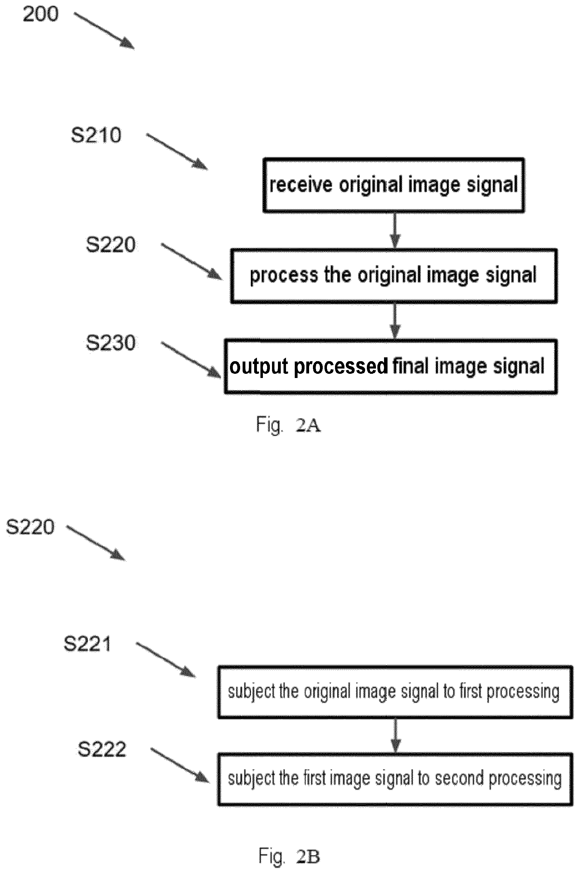

On this basis, according to one aspect of the present disclosure, an image processing method for a vision system is proposed. The image processing method can achieve downstream troubleshooting and locating in the vision system simply and conveniently without the use of an additional debugger, and has advantages such as simple, convenient and quick downstream fault locating and troubleshooting, low development/debugging costs and low maintenance costs. Fig. 1 shows a schematic block diagram of a vision system 100 according to embodiments of the present disclosure. Fig. 2A shows a flow chart of an image processing method 200 for a vision system according to embodiments of the present disclosure. Fig. 2B shows a flow chart of sub-steps of the image processing method 200 for a vision system according to embodiments of the present disclosure. The image processing method 200 for a vision system according to embodiments of the present disclosure is expounded below with reference to Figs. 1, 2A and 2B.

First referring to Fig. 1, the vision system 100 realizing the image processing method 200 according to the present disclosure is expounded.

Here, the vision system 100 may be configured as any vision system used in a motor vehicle. As an example, the vision system may not only be configured as the panoramic imaging system mentioned above, but may also include any vision system that needs to perform image interaction with and output image signals to the motor vehicle driver, such as a reversing camera system, an electronic rear view mirror system, an intelligent front camera system, a blind spot monitoring system, a driving recorder system, or an autonomous driving system based on a vision system.

Referring to Fig. 1, the vision system 100 according to embodiments of the present disclosure comprises an image output unit 110. The present disclosure has no intention of limiting the display technology or display method, etc. of the image output unit 110 here. It should be understood here that the image output unit 110 may be any image display apparatus capable of outputting image signals to the motor vehicle driver. As an example, when the vision system 100 is a reversing camera system or panoramic imaging system, etc. that conventionally needs to output image signals to the motor vehicle driver via a display panel, the image output unit 110 within the scope of the present disclosure may correspondingly be a display screen using any display technology on a console in the motor vehicle. As an example, as intelligent cockpit technology steadily develops, the image output unit 110 within the scope of the present disclosure may also be an image display apparatus with a non-conventional form of display screen, such as an AR-HUD.

In addition, referring to Fig. 1, the vision system 100 according to embodiments of the present disclosure comprises multiple processing units 120. As stated above, motor vehicle vision systems currently in use generally need to include multiple processing units to perform corresponding processing steps. The present disclosure has no intention here of limiting the number of processing units or the types, physical forms and specific functions of the processing units. It should be understood here that the multiple processing units 120 may be any number of multiple processing units required by the vision system 100 to perform its functions. Moreover, it should also be understood here that the multiple processing units 120 may be divided by taking into consideration multiple aspects such as specific functions or physical form. As an example, when the vision system 100 is specifically a panoramic imaging system, the multiple processing units 120 within the scope of the present disclosure may comprise multiple virtual functional module units such as an image distortion correction unit, a projective transformation unit, an image registration unit, an image fusion/stitching unit, etc. As an example, when the vision system 100 is specifically a panoramic imaging system, the multiple processing units 120 within the scope of the present disclosure may also comprise multiple physical entity units such as an image input processor (video input processor) with an image signal required path, a rendering processor, an output processor (video output processor), a head unit, etc.

In addition, referring to Fig. 1, according to embodiments of the present disclosure, the multiple processing units 120 further comprise a first processing unit 121 and a second processing unit 122. As stated above, the multiple processing units 120 may further comprise any number of other processing units. For conciseness, only the first processing unit 121 and the second processing unit 122 are expounded here. As an example, the first processing unit 121 and the second processing unit 122 may be any two of the multiple functional module units or multiple physical entity units mentioned above. The present disclosure likewise does not limit the types, physical forms and specific functions of the first processing unit 121 and the second processing unit 122 here. It should be understood that in order to realize the corresponding functions of the vision system 100, the multiple processing units 120 may also comprise other numbers or types of processing units, and multiple functional module units may be integrated in a single physical entity unit and be regarded as a processing unit in the sense of the present disclosure, or a single physical entity unit may be split into multiple functional module units and be regarded as multiple processing units in the sense of the present disclosure, or a single functional module unit may also be further split into multiple sub-functional module units and be regarded as multiple processing units in the sense of the present disclosure.

Now referring to Figs. 2A and 2B, an image processing method 200 according to embodiments of the present disclosure is expounded.

Referring to Fig. 2A, according to embodiments of the present disclosure, the image processing method 200 for a vision system comprises: in a first step S210, receiving an original image signal; in a second step S220, successively processing the original image signal by means of the multiple processing units 120; and in a third step S230, outputting a processed final image signal by means of the image output unit 110. The multiple processing units 120 comprise a first processing unit 121 and a second processing unit 122, and referring to Fig. 2B, step S220 of successively processing the original image signal by means of the multiple processing units 120 comprises: in a first sub-step S221, subjecting the original image signal to first processing by means of the first processing unit 121 to output a first image signal; and in a second sub-step S222, subjecting the first image signal to second processing by means of the second processing unit 122 to output a second image signal, wherein the first processing comprises adding a first marker M1 corresponding to the first processing unit 121, the second processing comprises adding a second marker M2 corresponding to the second processing unit 122, the final image signal comprises the first marker M1 and the second marker M2, and the first marker M1 is configured to be distinguishable from the second marker M2 through acquisition of the final image signal outputted by the image output unit 110.

Here, in the first step S210 of the image processing method 200 according to the present disclosure, it is possible for example to receive from a camera an original image signal which it has captured.

Here, in the second step S220 of the image processing method 200 according to the present disclosure, in order to subject the original signal to further processing to satisfy the functions which the vision system 100 needs to perform, it is also necessary to subject the inputted original image signal to processing in multiple processing steps by means of multiple processing units in a motor vehicle ECU, for example. That is, in the second step S220, the original image signal is subjected to corresponding processing by means of the multiple processing units 120. It should be understood that the present disclosure has no intention of limiting the specific form of processing here. As an example, when the vision system 100 is a panoramic imaging system, the processing performed in the second step S220 may comprise image distortion correction, projective transformation, image registration, image fusion/stitching, etc. Similarly as an example, when the vision system 100 is a reversing camera system, the processing performed in the second step S220 may comprise image correction, the addition of dynamic/static assistance lines, etc. In the first sub-step S221 and the second sub-step S222 included in the second step S220, the multiple processing steps performed on the original image signal as mentioned above may be realized by means of the first processing unit 121 and the second processing unit 122 respectively, which may be constructed as functional module units or physical entity units.

Moreover, here, according to embodiments of the present disclosure, in the first sub-step S221 and the second sub-step S222, the first processing and second processing performed by the first processing unit 121 and the second processing unit 122 should not only comprise corresponding processing that should be performed on original image data based on the requirements which the vision system 100 itself needs to meet, but should also respectively comprise adding the first marker M1 corresponding to the first processing unit 121 in an image frame F1 of the first image signal outputted by the first processing unit 121, and adding the second marker M2 corresponding to the second processing unit in an image frame F2 of the second image signal outputted by the second processing unit 122. Here, the first marker M1 and the second marker M2 are configured such that the first marker M1 and the second marker M2 are distinguishable from one another on an image frame Fn of the final image signal through the acquisition of the final image signal outputted by the image output unit 110. In other words, due to the fact that the first marker M1 and the second marker M2 are distinguishable from one another on the image frame (in Fig. 1, the different degrees of greyness of the first marker M1 and second marker M2 are used to indicate such a distinction schematically), if a fault occurs in the first processing unit 121 or the second processing unit 122 in the vision system 100, it is only necessary to acquire the final image signal and analyse whether a distorted marker on the image frame Fn thereof is the first marker M1 or the second marker M2 in order to determine whether a fault position is the first processing unit 121 or the second processing unit 122 corresponding to the distorted marker. Similarly, it should be obvious that if the multiple processing units 120 comprise a greater number of processing units, the determination of fault position can be similarly achieved by the same principle by the greater number of processing units adding corresponding markers M1, M2......Mn which are distinguishable from one another on the final image signal.

Based on the above, in the present disclosure, when each processing unit is subjecting the image signal to processing, a marker is added which corresponds to this processing, the markers being distinguishable from one another on the image frame Fn of the final image signal outputted by the image output unit; for this reason, if a fault occurs in one of the processing units in the vision system 100, the fault position can be determined by acquiring the final image signal and analysing the distorted marker on the image frame Fn thereof, because the markers M1, M2......Mn can be distinguished from one another. Thus, the image processing method 200 according to the present disclosure has the advantage of simple, convenient and quick downstream fault locating and troubleshooting, reducing the development/debugging costs of the vision system 100 as well as the maintenance costs in the event of a fault.

In addition, because the first marker M1 and the second marker M2 that can be used downstream for locating faults are added to the final image signal, there is a requirement to minimize the impact on the original functions of the vision system 100 and on the driver of the motor vehicle caused by the obscuration of the original picture in the image frame Fn of the final image signal by the first marker M1 and the second marker M2.

Thus, in a more detailed implementation of the image processing method according to the present disclosure, in the first sub-step S221, the first marker M1 is added at a first frame rate lower than an output frame rate of the final image signal; and in the second sub-step S222, the second marker M2 is added at a second frame rate lower than the output frame rate of the final image signal.

Here, the first frame rate or second frame rate used to add the first marker M1 or second marker M2 should be understood as being the frequency at which the first marker M1 or second marker M2 appears in the final image signal after being added. As an example, if the first marker M1 or second marker M2 is added at a first frame rate or second frame rate m fps, this means that per unit time of 1 s, the first marker M1 or second marker M2 is added to m image frames of the final image signal, and after being added, the first marker M1 or second marker M2 will appear in the final image signal at a frequency of m frames/s, i.e. m fps.

Here, the first marker M1 and second marker M2 are added to the image signal processed by the vision system 100 at a first frame rate and a second frame rate which are lower than, preferably significantly lower than the output frame rate of the final image signal of the vision system 100. Here, the first frame rate and second frame rate may be the same or different. In other words, the first marker M1 and the second marker M2 will only be added to and appear in one or a few image frames Fn of the final image signal, not all image frames of the final image signal. Moreover, although this will make it difficult for the motor vehicle driver or maintenance person to observe the abovementioned markers M1, M2......Mn and locate a fault when necessary with the naked eye alone, it is only necessary to capture the final image signal by means of a camera device with a capture frame rate higher than the output frame rate of the final image signal in order to record all image frames of the final image signal, seek out from among these the image frames to which the first marker M1 and second marker M2 have been added, and locate a fault when necessary.

Based on the above, by means of a more detailed implementation of the image processing method 200 according to the present disclosure, the markers used for downstream fault locating (e.g. the first marker M1 and the second marker M2) only obscure the original picture in one or a few image frames, significantly reducing the impact which the addition of markers for downstream fault locating has on the original functions of the vision system 100 and on the motor vehicle driver.

In addition, taking into account the fact that the output frame rate of the final image signal of the vision system 100 used in the motor vehicle is generally 30 fps or 25 fps for example, for this reason, in a more detailed implementation of the image processing method 200 according to the present disclosure, the first frame rate and the second frame rate are not greater than 3 fps, and are preferably 1 fps.

According to the experimental data disclosed in "lonescu MR. Subliminal perception of complex visual stimuli. Rom J Ophthalmol. 2016 Oct-Dec; 60(4): 226-230. PMID: 29450354; PMCID: PMC5711286.", if the duration of an image stimulus exceeds 116.66 ms, this can attract people's attention notably. Thus, in order to reduce the impact which the abovementioned markers M1, M2......Mn have on the motor vehicle driver, the duration of display of the markers M1, M2.....Mn must be less than 116.66 ms.

Taking into account the fact that each picture frame lasts for 33.33 ms in a 30 fps vision system, and each picture frame lasts for 40 ms in a 25 fps vision system, the markers M1, M2......Mn are only permitted to be added to a maximum of 3 frames of the final image signal. Thus, in the case of a common 30 fps vision system, the markers M1, M2......Mn will only be displayed continuously for 100 ms, which is not enough to attract the attention of the motor vehicle driver; and in the case of a common 25 fps vision system, the markers M1, M2......Mn will only be displayed continuously for 120 ms, which is not enough to have a significant impact on the motor vehicle driver. In other words, the markers M1, M2......Mn may be added at a frame rate not greater than 3 fps, and preferably a frame rate of 1 fps. Based on the above, in the case of the preferred 1 fps, the marker for downstream fault locating is added to only 1 image frame out of every 30 image frames, for example, of the final image signal. Thus, when using the vision system 100, the motor vehicle driver will find it difficult to notice the markers for downstream fault locating in the final image signal, so the interference caused to the original functions of the vision system 100 and to the motor vehicle driver by the markers for downstream fault locating (e.g. the first marker M1 and the second marker M2) is minimized. Furthermore, with the technological development of image capture devices, mobile phone cameras and digital cameras, etc. that can be easily acquired and used by maintenance personnel or developers are already enough to observe and capture markers for downstream fault locating which appear at 1 fps. Thus, motor vehicle drivers, maintenance personnel or developers can easily use digital cameras, mobile phone cameras, etc. to observe and acquire markers, to locate any faults that arise.

In addition, in a more detailed embodiment of the image processing method 200 according to the present disclosure, the markers used for downstream fault locating, for example the first marker M1 and the second marker M2 may be constructed as watermarks in the image frame Fn of the final image signal, i.e. the first marker M1 may be constructed as a first watermark, and the second marker M2 may be constructed as a second watermark which can be distinguished from the first watermark through acquisition of the final image signal outputted by the image output unit 110.

Based on the above, the markers M1, M2......Mn used for downstream fault locating are constructed as watermarks and, for example, are faintly incorporated in the image frame Fn of the final image signal. Thus, the presence of the markers in the image frame is not abrupt, and this can further reduce obscuration of the original picture in the image frame of the final image signal and the impact on the motor vehicle driver caused by the markers used for downstream fault locating (e.g. the first marker M1 and the second marker M2) in the image frame to which markers have been added.

In addition, as stated above, the markers M1, M2......Mn used for downstream fault locating need to be distinguishable from each other, i.e. the first marker M1 needs to be configured to be distinguishable from the second marker M2 through acquisition of the final image signal outputted by the image output unit 110. Thus, according to a more detailed embodiment of the present disclosure, the markers M1, M2......Mn used for downstream fault locating may be distinguished from one another by their colour and/or shape and/or position in the image frame of the final image signal, i.e. the first marker M1 may have a colour and/or shape and/or position in the image frame Fn of the final image signal which is distinguishable from the second marker M2 through acquisition of the final image signal outputted by the image output unit 110.

Based on the above, the multiple markers M1, M2......Mn used for downstream fault locating may be distinguished from one another through differences in colour and/or shape and/or position in the image frame Fn of the final image signal. As an example, the first marker M1 and the second marker M2 may have different colours, to correspond to the first processing unit 121 and the second processing unit 122. If a fault occurs downstream, then based on the colour of a marker that has become distorted due to a fault in the final image signal, it is possible to judge which of the multiple markers said marker is, and determine the processing unit corresponding thereto as the fault position, thus locating the fault. As an example, the first marker M1 and the second marker M2 may have different shapes, to correspond to the first processing unit 121 and the second processing unit 122. If a fault occurs downstream, then based on the shape of a marker that has become distorted due to a fault in the final image signal, it is possible to judge which of the multiple markers said marker is, and determine the processing unit corresponding thereto as the fault position, thus locating the fault. As an example, the first marker M1 and the second marker M2 may have different positions in the image frame of the final image signal, to correspond to the first processing unit 121 and the second processing unit 122. If a fault occurs downstream, then based on the position of a marker that has become distorted due to a fault in the final image signal, it is possible to judge which of the multiple markers said marker is, and determine the processing unit corresponding thereto as the fault position, thus locating the fault. In addition, as an example, multiple aspects such as colour, shape and position in the image frame, etc. may also be combined to configure differences between multiple markers used for downstream fault locating, in order to distinguish the multiple markers used for downstream fault locating from one another, and further achieve respective correspondence between each of the multiple markers used for downstream fault locating and each of the multiple processing units 120, so that if a fault occurs downstream, the fault can be located conveniently and quickly as described above.

In addition, in order that faults manifested at any position in the image frame Fn of the final image signal can be better reflected by marker distortion, according to a more detailed embodiment of the present disclosure, the first marker M1 and/or the second marker M2 may be constructed as multiple pixel points widely distributed in the image frame Fn of the final image signal.

Based on the above, multiple markers used for downstream fault locating, for example the first marker M1 and/or the second marker M2 may be constructed as multiple pixel points, and the pixel points may cover the image frame Fn of the final image signal widely, i.e. over as large an area as possible. Thus, firstly, due to the fact that the markers used for downstream fault locating are merely pixel points, the image processing method 200 according to a more detailed embodiment of the present disclosure has the advantage of obscuring little of the original picture in the image frame Fn of the final image signal and having little impact on the motor vehicle driver. Secondly, because the multiple pixel points (multiple markers for downstream fault locating) are widely distributed in the image frame Fn of the final image signal, faults manifested at any position in the image frame Fn of the final image signal will be able to at least simultaneously cause distortion of some of the multiple markers M1, M2......Mn used for downstream fault locating (e.g. changes in marker colour, shape, position in the image frame, distribution, etc.). In other words, the image processing method 200 according to a more detailed embodiment of the present disclosure has the advantage of high sensitivity in fault detection.

In summary, through the addition of markers M1, M2......Mn when each processing unit is subjecting the image signal to processing, the markers corresponding to the processing and being distinguishable from one another on the image frame Fn of the final image signal outputted by the image output unit, the image processing method 200 according to the present disclosure has the advantages of simple, convenient and quick downstream fault locating and troubleshooting, and low development, maintenance and debugging costs. Furthermore, because the markers M1, M2......Mn are added to the image frame Fn of the final image signal at a suitable frame rate and in a suitable form, the image processing method 200 according to the present disclosure has the further advantages of not affecting the original functions of the vision system 100 and not disturbing the motor vehicle driver. Moreover, because the markers M1, M2......Mn are widely distributed on the image frame Fn of the final image signal to comprehensively reflect faults in the image frame of the final image signal without omission, the image processing method 100 according to the present disclosure has the further advantage of high sensitivity in fault detection.

According to another aspect of the present disclosure, a vision system 100 is proposed. The vision system 100 has advantages corresponding to those of the image processing method 200, i.e. troubleshooting and locating in the vision system 100 can be performed simply and conveniently without the use of an additional debugger, and the vision system has advantages such as simple, convenient and quick downstream fault locating and troubleshooting, low development/debugging costs and low maintenance costs. As stated above, Fig. 1 has already shown a schematic block diagram of the vision system 100 according to embodiments of the present disclosure. For simplicity of presentation, no additional figure is drawn here, and the vision system 100 according to the present disclosure is expounded with reference to Fig. 1.

Here, the vision system 100 according to embodiments of the present disclosure comprises an image output unit 110 and multiple processing units 120, the multiple processing units 120 comprising a first processing unit 121 and a second processing unit 122, the first processing unit 121 being configured to subject the original image signal to first processing to output a first image signal; the second processing unit 122 being configured to subject the first image signal to second processing to output a second image signal; and the image output unit 110 being configured to output a final image signal, wherein the first processing comprises adding a first marker M1 corresponding to the first processing unit 121, the second processing comprises adding a second marker M2 corresponding to the second processing unit 122, the final image signal comprises the first marker M1 and the second marker M2, and the first marker M1 is configured to be distinguishable from the second marker M2 through acquisition of the final image signal outputted by the image output unit 110.

Here, for the specific configurations applied to the image output unit 110, the multiple processing units 120 and the first processing unit 121 and second processing unit 122 included in the vision system 100 in the sense of the present disclosure, see the exposition relating to Figs. 1 - 2B above; for simplicity of presentation, details are not repeated here.

Based on the above, in the present disclosure, when subjecting the image signal to processing, each processing unit can add a marker M1, M2...Mn which corresponds to this processing, the markers being distinguishable from one another on the image frame Fn of the final image signal outputted by the image output unit 110; for this reason, if a fault occurs in one of the processing units in the vision system 100, the fault position can be determined by acquiring the final image signal and analysing the distorted marker M1, M2......Mn on the image frame Fn thereof, because the markers M1, M2......Mn can be distinguished from one another. Thus, the vision system 100 according to the present disclosure has the advantage of simple, convenient and quick downstream fault locating and troubleshooting, reducing the development/debugging costs of the vision system 100 as well as the maintenance costs in the event of a fault.

Here, in a more detailed implementation of the vision system 100 according to the present disclosure, the first processing unit 121 is further configured to add the first marker M1 in the first processing at a first frame rate lower than an output frame rate of the final image signal, and the second processing unit 122 is further configured to add the second marker M2 in the second processing at a second frame rate lower than the output frame rate of the final image signal.

Furthermore, in a more detailed implementation of the vision system 100 according to the present disclosure, the first frame rate and the second frame rate are not greater than 3 fps, and are preferably 1 fps.

Furthermore, in a more detailed implementation of the vision system 100 according to the present disclosure, the vision system 100 is configured to construct the first marker M1 as a first watermark, and construct the second marker M2 as a second watermark which can be distinguished from the first watermark through acquisition of the final image signal outputted by the image output unit.

Furthermore, in a more detailed implementation of the vision system 100 according to the present disclosure, the first marker M1 has a colour and/or shape and/or position in the image frame Fn of the final image signal which is distinguishable from the second marker M2 through acquisition of the final image signal outputted by the image output unit 110.

Furthermore, in a more detailed implementation of the vision system 100 according to the present disclosure, the first marker M1 and/or the second marker M2 is constructed as pixel points widely distributed in the image frame Fn of the final image signal.

In summary, for the functions and advantages afforded by the abovementioned more detailed implementations of the vision system 100 according to the present disclosure, see the corresponding parts of the exposition relating to the image processing method 100 according to the present disclosure above; for simplicity of presentation, details are not repeated here.

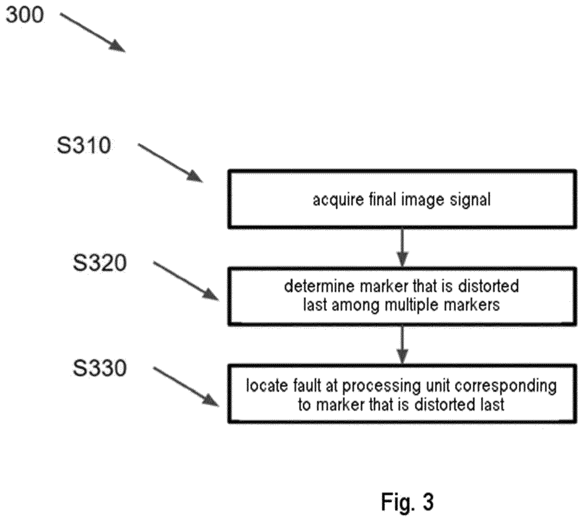

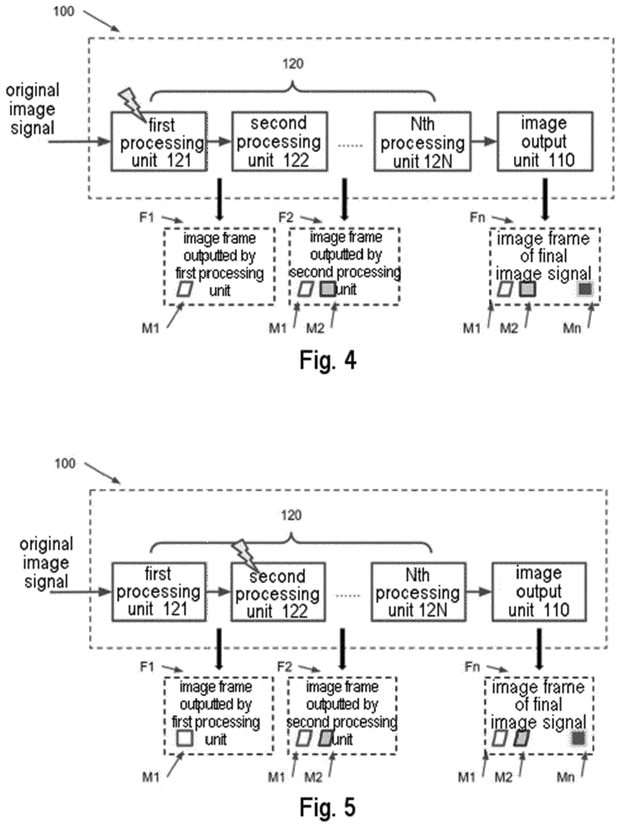

According to another aspect of the present disclosure, a fault locating method 300 for a vision system 100 is proposed. The fault locating method 300 can achieve troubleshooting and locating in the vision system simply and conveniently without the use of an additional debugger, and has advantages such as simple, convenient and quick fault locating and troubleshooting, low development/debugging costs and low maintenance costs. Fig. 3 shows a flow chart of the fault locating method 300 for the vision system 100 according to embodiments of the present disclosure. Fig. 4 shows a schematic block diagram of the vision system 100 according to embodiments of the present disclosure when the first processing unit 121 has a fault. Fig. 5 shows a schematic block diagram of the vision system 100 according to embodiments of the present disclosure when the second processing unit 122 has a fault. The fault locating method 300 for a vision system 100 according to embodiments of the present disclosure is expounded below with reference to Figs. 1, 3, 4 and 5.

See Fig. 3, which shows the fault locating method 300 for a vision system 100 according to embodiments of the present disclosure. Here, the vision system 100, as shown in Fig. 1, comprises an image output unit 110 and multiple processing units 120, the multiple processing units 120 being configured to successively subject the original image signal to processing, the processing comprising adding markers M1, M2......Mn corresponding to the respective processing units, wherein the multiple markers M1, M2......Mn corresponding to each of the multiple processing units 120 are configured to be distinguishable from one another through acquisition of a final image signal outputted by the image output unit, and the image output unit 110 is configured to output the final image signal, the fault locating method 300 comprising: in step S310, acquiring the final image signal outputted by the image output unit 110, the final image signal comprising multiple markers M1, M2......Mn corresponding to each of the multiple processing units 120; in step S320, determining a marker that is distorted last among the multiple markers M1, M2......Mn; and in step S330, locating a fault as being at the processing unit corresponding to the marker that is distorted last.

Refer to Fig. 4, which shows the case where a fault occurs in the processing of the first processing unit 121. The fault in the processing of the first processing unit 121 likewise causes distortion of the first marker M1 added in this processing. In Fig. 4, this distortion is indicated by schematically changing the first marker M1 shown schematically as a square to the first marker M1 shown schematically as a parallelogram. No faults occur in the processing of the downstream processing units, e.g. the second processing unit 122 to the Nth processing unit, so the second marker M2 to the Nth marker Mn added in their processing are not distorted. In other words, by determining the marker that is distorted last in step S320, i.e. the first marker M1, a judgement can be made in step S330 that the processing unit where the fault has occurred is the first processing unit 121 corresponding to the distorted first marker M1, thus locating the fault.

Refer to Fig. 5, which shows the case where a fault occurs in the processing of the second processing unit 122. Here, in the downstream image frames F2 to Fn processed by the second processing unit 122, a fault occurring in the second processing of the second processing unit 122 not only causes distortion of the second marker M2 added in the second processing, but also causes distortion of the first marker M1, which was added by the first processing unit 121 preceding the second processing unit 122 and undergoes the second processing. Thus, as shown in Fig. 5, both the first marker M1 and the second marker M2 are distorted in the image frame Fn of the final image signal. In other words, by determining the marker that is distorted last in step S320, i.e. the second marker M2, a judgement can be made in step S330 that the processing unit where the fault has occurred is the second processing unit 122 corresponding to the distorted second marker M2, thus locating the fault.

Based on the above, in the fault locating method 300 according to embodiments of the present disclosure, a specialist is not required to troubleshoot and analyse the fault with the aid of a corresponding additional debugger in a complex operation. Here, the position of the fault can be determined by merely acquiring the final image signal and analysing the distorted marker on the image frame Fn thereof, because the markers M1, M2...Mn can be distinguished from one another. Thus, the fault locating method 300 according to the present disclosure has the advantage of simple, convenient and quick fault locating and troubleshooting, reducing the development/debugging costs of the vision system as well as the maintenance costs in the event of a fault.

In addition, as stated above, in order to reduce the impact on the original functions of the vision system 100 and on the motor vehicle driver caused by obscuration of the original picture in the image frame Fn of the final image signal by the markers used for fault locating, in a more detailed implementation of the fault locating method 300 according to the present disclosure, the markers corresponding to each of the multiple processing units 120 are added at a frame rate lower than an output frame rate of the final image signal.

Here, the markers M1, M1......Mn used for fault locating are added to the image signal processed by the vision system 100 at a frame rate lower than, preferably significantly lower than the output frame rate of the final image signal of the vision system 100. In other words, the markers M1, M1......Mn used for fault locating are only added to and only appear in one or a few image frames Fn of the final image signal, not all image frames of the final image signal. Thus, the motor vehicle driver or maintenance person will find it difficult to observe the markers M1, M2......Mn with the naked eye alone, so the impact of the markers M1, M2......Mn on the motor vehicle driver during normal use of the vision system 100 is reduced.

In addition, taking into account the fact that the output frame rate of the final image signal of the vision system 100 used in the motor vehicle is generally 30 fps for example, for this reason, in a more detailed implementation of the fault locating method 300 according to the present disclosure, the frame rate is not greater than 3 fps, and is preferably 1 fps.

Based on the above, in the case of the preferred 1 fps, the markers M1, M2......Mn used for downstream fault locating are added to only 1 image frame out of every 30 image frames, for example, of the final image signal. Thus, when using the vision system 100 normally, the motor vehicle driver will find it difficult to notice the markers M1, M2......Mn used for downstream fault locating in the final image signal, so the interference caused to the original functions of the vision system 100 and to the motor vehicle driver by the markers M1, M2......Mn used for downstream fault locating is minimized.

In addition, in order to further reduce the interference caused to the original functions of the vision system 100 and to the motor vehicle driver by the markers M1, M2......Mn used for downstream fault locating in normal use, in a more detailed implementation of the fault locating method 300 according to the present disclosure, the markers M1, M2......Mn corresponding to each of the multiple processing units are constructed as watermarks which are distinguishable from one another through acquisition of the final image signal outputted by the image output unit.

Based on the above, the markers M1, M2......Mn used for fault locating may be constructed as watermarks and, for example, faintly incorporated in the image frame Fn of the final image signal. Thus, the presence of the markers M1, M2......Mn in the image frame is not abrupt, and this can further reduce obscuration of the original picture in the image frame Fn of the final image signal and the impact on the motor vehicle driver caused by the markers M1, M2......Mn used for downstream fault locating in the image frame to which markers have been added, during normal use of the vision system 100.

In addition, in order to achieve reliable acquisition of the markers M1, M2......Mn used for fault locating that do not appear in all of the image frames of the final image signal, in a more detailed implementation of the fault locating method 300 according to the present disclosure, in step S310, the final image signal outputted by the image output unit is acquired by means of an image acquisition device, wherein an acquisition frame rate of the image acquisition device is higher than an image output frame rate of the image output unit 110.

Here, with the technological development of image capture devices, the capture frame rates of digital cameras, mobile phones, etc. are already significantly higher than display frame rates of vision devices 100 in motor vehicles. For example, mobile phones capable of performing video capture at 4k resolution and a frame rate of 60 fps are already on the market at the present time; their capture frame rate/acquisition frame rate is already significantly higher than that of a 30 fps vision system for example, and they are able to reliably acquire markers M1, M2......Mn in the form of pixel points. In other words, motor vehicle drivers, maintenance personnel or developers can use the image capture function of readily accessible digital cameras, mobile phones, etc. conveniently and easily to acquire all of the image frames in the final image signal outputted by the image output unit in step S320. Image frames to which markers M1, M2......Mn used for downstream fault locating have been added can be sought out from among all of the image frames to determine the marker that is distorted last in step S320 and locate the fault in step S330.

Based on the above, there is no need for an additional debugger, and faults can be located solely with the aid of readily available image acquisition devices, such as digital cameras, mobile phones, etc. Thus, the fault locating method 300 according to the present disclosure has the advantage of simple, convenient and quick fault locating and troubleshooting, reducing the development/debugging costs of the vision system 100 as well as the maintenance costs in the event of a fault.

In addition, in order to distinguish the markers M1, M2......Mn used for fault locating from one another, in a more detailed implementation of the fault locating method 300 according to the present disclosure, the markers M1, M2......Mn corresponding to each of the multiple processing units 120 have respective colours and/or shapes and/or positions in the image frame Fn of the final image signal which are distinguishable from one another through acquisition of the final image signal outputted by the image output unit 110.

Based on the above, as in the corresponding exposition above relating to the image processing method 300 according to the present disclosure, the multiple markers M1, M2......Mn used for downstream fault locating may be distinguished from one another simply and conveniently in step S320 through differences in colour and/or shape and/or position in the image frame Fn of the final image signal. As an example, differences between multiple markers M1, M2......Mn used for fault locating may be configured solely through differences in colour and/or shape and/or position in the image frame Fn of the final image signal, or by combining multiple aspects such as colour, shape and position in the image frame, in order to distinguish the multiple markers M1, M2......Mn used for fault locating from one another. Furthermore, respective correspondence between each of the multiple markers M1, M2......Mn used for downstream fault locating and each of the multiple processing units 120 is further achieved, so that if a fault occurs downstream, the fault can be located conveniently and quickly as described above.

In addition, in order to be able to locate faults at any position in the image frame Fn of the final image signal comprehensively without omission, in a more detailed implementation of the fault locating method 300 according to the present disclosure, the markers M1, M2......Mn corresponding to each of the multiple processing units 120 are respectively constructed as multiple pixel points widely distributed in the image frame Fn of the final image signal.

Here, the multiple markers M1, M2......Mn used for downstream fault locating may, as the pixel points, cover the image frame of the final image signal widely, i.e. over as large an area as possible. Thus, firstly, due to the fact that the markers used for downstream fault locating are merely pixel points, there is little obscuration of the original picture in the image frame Fn of the final image signal and little impact on the motor vehicle driver. Secondly, because the multiple pixel points are widely distributed in the image frame Fn of the final image signal, faults manifested at any position in the image frame Fn of the final image signal will be able to at least cause distortion of some of the multiple markers M1, M2......Mn used for downstream fault locating (e.g. changes in marker colour, shape, position in the image frame, distribution, etc.).

Based on the above, the fault locating method 300 according to embodiments of the present disclosure can locate faults at any position in the image frame Fn of the final image signal comprehensively without omission, with as little impact as possible on the motor vehicle driver and the original functions of the vision system 100.

In summary, by acquiring the final image signal outputted by the image output unit and analysing the markers M1, M2......Mn which are distinguishable from one another on the image frame Fn of the final image signal, the fault locating method 300 according to the present disclosure can troubleshoot and locate faults that occur in the vision system 100 simply, conveniently and quickly without the aid of a specialized additional debugger, and has the advantages of simple, convenient and quick fault locating and troubleshooting, and low development, maintenance and debugging costs. Furthermore, the markers M1, M2......Mn used are added to the image frame Fn of the final image signal at a suitable frame rate and in a suitable form, so the fault locating method 300 according to the present disclosure has the further advantage that its use does not affect the original functions of the vision system 100 and does not disturb the motor vehicle driver. Moreover, the markers M1, M2......Mn used are widely distributed on the image frame Fn of the final image signal, so the fault locating method 300 according to the present disclosure has the further advantage that fault detection is comprehensive and highly sensitive without omission.

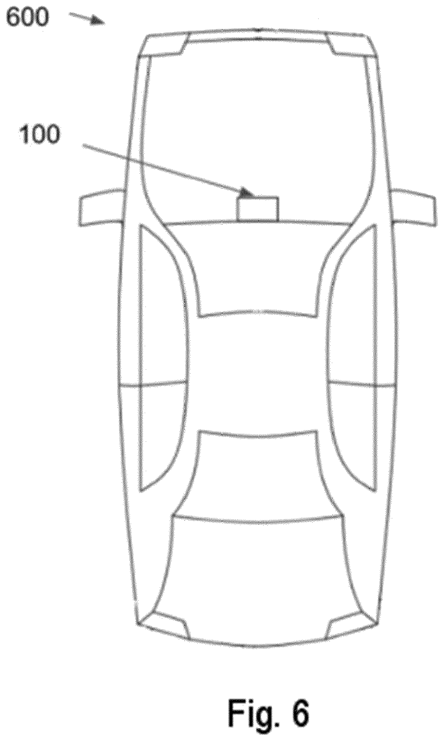

According to another aspect of the present disclosure, a motor vehicle 600 is proposed. Fig. 6 shows a schematic embodiment of the motor vehicle 600 according to the present disclosure. Here, the motor vehicle 600 comprises the vision system 100 according to embodiments of the present disclosure. Here, the motor vehicle 600 according to the present disclosure may be any vehicle. A preferred motor vehicle is, for example, a road vehicle or a track vehicle. Particularly preferably, the motor vehicle is a road vehicle, such as a passenger vehicle or a truck.

The motor vehicle 600 according to the present disclosure has advantages corresponding to those of the vision system 100 according to the present disclosure; for conciseness, details are not repeated here.

The present disclosure uses specific words to describe embodiments of the present disclosure. For example, "more detailed embodiment" and "more detailed implementation" refer to a particular feature, structure or characteristic relevant to at least one embodiment of the present disclosure. Therefore, it should be stressed and noted that the expression "more detailed embodiment" or "more detailed implementation" mentioned two or more times in different places herein does not necessarily refer to the same embodiment. In addition, certain features, structures or characteristics in one or more embodiments of the present disclosure may be combined appropriately.

Unless otherwise defined, all of the terms (including technical and scientific terms) used herein have the same meanings as those commonly understood by those skilled in the art. It should also be understood that terms such as those generally defined in a dictionary should be interpreted as having the same meanings as in the context of the related art, rather than being interpreted in an idealized or extremely formalised sense, unless expressly so defined herein.

The above is a description of the present disclosure, and should not be regarded as limiting it. Although some exemplary embodiments of the present disclosure have been described, those skilled in the art will readily understand that many modifications could be made to the exemplary embodiments without departing from the original teaching and advantages of the present disclosure. Therefore, all such modifications are intended to be included in the scope of the present disclosure as defined by the claims. It should be understood that the above is a description of the present disclosure, and should not be deemed to be limited to the specific embodiments disclosed; in addition, modifications made to the disclosed embodiments and other embodiments are intended to be included within the scope of the attached claims. The present disclosure is defined by the claims and their equivalents.

## Claims

1. Image processing method for a vision system, wherein the vision system comprises an image output unit and multiple processing units, the image processing method comprising:
receiving an original image signal;
successively processing the original image signal by means of the multiple processing units; and
outputting a processed final image signal by means of the image output unit,
wherein the multiple processing units comprise a first processing unit and a second processing unit, and the step of successively processing the original image signal by means of the multiple processing units comprises:
subjecting the original image signal to first processing by means of the first processing unit to output a first image signal;
subjecting the first image signal to second processing by means of the second processing unit to output a second image signal,
wherein the first processing comprises adding a first marker corresponding to the first processing unit, the second processing comprises adding a second marker corresponding to the second processing unit, the final image signal comprises the first marker and the second marker, and the first marker is configured to be distinguishable from the second marker through acquisition of the final image signal outputted by the image output unit.

2. Image processing method according to Claim 1, wherein
in the first processing, the first marker is added at a first frame rate lower than an output frame rate of the final image signal, and
in the second processing, the second marker is added at a second frame rate lower than the output frame rate of the final image signal.

3. Image processing method according to Claim 2, wherein
the first frame rate and the second frame rate are not greater than 3 fps.

4. Image processing method according to Claim 1, wherein
the first marker is constructed as a first watermark, and
the second marker is constructed as a second watermark which is distinguishable from the first watermark through acquisition of the final image signal outputted by the image output unit.

5. Image processing method according to Claim 1, wherein
the first marker has a colour and/or shape and/or position in an image frame of the final image signal which is distinguishable from the second marker through acquisition of the final image signal outputted by the image output unit.

6. Image processing method according to any one of Claims 1-5, wherein
the first marker and/or the second marker is constructed as multiple pixel points widely distributed in an image frame of the final image signal.

7. Vision system, comprising an image output unit and multiple processing units, the multiple processing units comprising a first processing unit and a second processing unit,
the first processing unit being configured to subject an original image signal to first processing to output a first image signal;
the second processing unit being configured to subject the first image signal to second processing to output a second image signal; and
the image output unit being configured to output a final image signal,
wherein the first processing comprises adding a first marker corresponding to the first processing unit, the second processing comprises adding a second marker corresponding to the second processing unit, the final image signal comprises the first marker and the second marker, and the first marker is configured to be distinguishable from the second marker through acquisition of the final image signal outputted by the image output unit.

8. Vision system according to Claim 7, wherein
the first processing unit is further configured to add the first marker in the first processing at a first frame rate lower than an output frame rate of the final image signal, and
the second processing unit is further configured to add the second marker in the second processing at a second frame rate lower than the output frame rate of the final image signal.

9. Vision system according to Claim 8, wherein
the first frame rate and the second frame rate are not greater than 3 fps.

10. Vision system according to Claim 7, wherein
the vision system is configured to construct the first marker as a first watermark, and construct the second marker as a second watermark which is distinguishable from the first watermark through acquisition of the final image signal outputted by the image output unit.

11. Vision system according to Claim 7, wherein
the first marker has a colour and/or shape and/or position in an image frame of the final image signal which is distinguishable from the second marker through acquisition of the final image signal outputted by the image output unit.

12. Vision system according to Claim 7, wherein
the first marker and/or the second marker is constructed as multiple pixel points widely distributed in an image frame of the final image signal.

13. Vision system according to any one of Claims 7 - 12, wherein
the vision system comprises a panoramic imaging system, a reversing camera system, an electronic rear view mirror system, an intelligent front camera system, a blind spot monitoring system, a driving recorder system and an autonomous driving system based on a vision system.

14. Fault locating method for a vision system, wherein
the vision system comprises an image output unit and multiple processing units, the multiple processing units being configured to successively subject an original image signal to processing, the processing comprising adding a marker corresponding to the respective processing unit, wherein multiple markers corresponding to each of the multiple processing units are configured to be distinguishable from one another through acquisition of a final image signal outputted by the image output unit, and the image output unit is configured to output the final image signal,
the fault locating method comprising:
acquiring the final image signal outputted by the image output unit, the final image signal comprising multiple markers corresponding to each of the multiple processing units;
determining a marker that is distorted last among the multiple markers;
locating a fault as being at the processing unit corresponding to the marker that is distorted last.

15. Fault locating method according to Claim 14, wherein
the markers corresponding to each of the multiple processing units are added at a frame rate lower than an output frame rate of the final image signal.

16. Fault locating method according to Claim 15, wherein
the frame rate is not greater than 3 fps.

17. Fault locating method according to Claim 14, wherein
the markers corresponding to each of the multiple processing units are constructed as watermarks which are distinguishable from one another through acquisition of the final image signal outputted by the image output unit.

18. Fault locating method according to Claim 14, wherein
the final image signal outputted by the image output unit is acquired by means of an image acquisition device, wherein an acquisition frame rate of the image acquisition device is higher than an image output frame rate of the image output unit.

19. Fault locating method according to Claim 14, wherein
the markers corresponding to each of the multiple processing units have respective colours and/or shapes and/or positions in an image frame of the final image signal which are distinguishable from one another through acquisition of the final image signal outputted by the image output unit.

20. Fault locating method according to Claims 14 - 19, wherein
the markers corresponding to each of the multiple processing units are respectively constructed as multiple pixel points widely distributed in an image frame of the final image signal.

21. Motor vehicle, comprising the vision system according to Claims 7 - 13.
